# EUROPEAN PATENT APPLICATION

(11) **EP 4 160 168 A1**
(43) Date of publication of application: **05.04.2023**
(21) Application number: 21200105.1
(22) Date of filing: 30.09.2021
(51) Int. Cl.: G01J 3/02, G01J 3/453

(54) **ROTATIONAL OPTICAL DELAY LINE ASSEMBLY FOR SPECTROSCOPY**

(71) Applicant: ETH Zurich, 8092 Zurich (CH)
(72) Inventor: SCALARI, Giacomo, 8049 Zurich (CH); SHAMMOHAMMADI, Mehran, 8052 Zurich (CH); MARKMANN, Sergej, 8134 Adliswil (CH); FORRER, Andres, 9000 St. Gallen (CH); FRANCKIÉ, Martin, 8426 Lufingen (CH)

(57) **Abstract**

An optical delay line assembly (1) comprises a rotatable mirror device (M) defining a rotation axis (A), wherein the rotatable mirror device (M) comprises at least one mirror pair (P) comprising a first plane mirror surface (S₁) and a second plane mirror surface (S₁₂) and at least one fixed reflector device (R₁), arranged such that an optical delay-line beam (11) coupled into the delay line assembly (1) is able to propagate along a rotation-dependent delay path between a spatially fixed input point (IN) and a spatially fixed output point (OUT), wherein the rotation-dependent delay path comprises at least two reflections off the first plane mirror surface of each mirror pair offset from each other in a direction parallel to the rotation axis, at least two reflections off the second plane mirror surface of each mirror pair offset from each other in a direction parallel to the rotation axis, and at least two reflections off each fixed reflector device offset from each other in a direction parallel to the rotation axis (A).

## Description

### TECHNICAL FIELD

The present invention relates to an optical delay line assembly, an optical spectrometer comprising said optical delay line assembly and a measurement method using said optical spectrometer.

### PRIOR ART

Interferometers comprising optical delay lines are widespread both in industry and scientific research. Fourier-transform spectrometers for instance are frequently used to measure optical spectra. Fourier-transform spectrometers generally comprise a light source emitting a light beam, the light beam being split into a static-path beam propagating on a static path, and a delay-line beam propagating on a variable delay path. Both the static-path beam and the delay-line beam are subsequently recombined and spatially superposed before impinging on an optical detector. By changing the length of the variable delay path with respect to the static path, a phase difference between the static-path beam and the delay-line beam is introduced. Depending on the phase difference, the static-path beam and the delay-line beam may interfere constructively or destructively when being superposed, which results in a modulation of the signal measured by the optical detector as a function of the path length difference. By recording the signal measured by the optical detector while scanning the path length difference, an interferogram is obtained, which may be Fourier-transformed to retrieve the spectrum of the light source.

The spectral resolution achievable using such a setup is inversely proportional to the path length difference, while the rate at which interferograms may be acquired is primarily limited by the speed at which this path length difference can be scanned. In traditional setups, the path length difference is usually scanned by putting a retroreflecting mirror onto a motorized linear translation stage. In cases where a very high resolution is desired, for instance when trying to measure narrow spectral absorption lines of a sample placed before the detector, the path length difference may need to amount from centimeters up to several meters. As a consequence, a linear translation stage capable of scanning over such a path length difference may occupy a considerable amount of space in a measurement setup. Furthermore, to keep the data acquisition times reasonable, the linear translation stage is required to move fast and preferably at a constant speed, which may entail a range of technical challenges, in particular as the stage has to accelerate and decelerate over a short distance to reverse its moving direction in order to keep scanning smoothly.

DE 3446014 A1 proposes the use of a rotating component for scanning the path length difference. The document discloses a first mirror element which reflects an incoming beam bundle in a direction parallel to the incident direction but with a lateral offset and a second mirror element arranged perpendicular to the reflected beam bundle such that the path travelled by the beam bundle to reach the second mirror is travelled backwards a second time. As the first mirror element is rotating, the optical path length travelled by the beam bundle is altered. Said first and second mirror element replace the arm of a conventional Michelson interferometer in which the path difference is generated by a linear back- and forth movement of the moving mirror. The first (rotating) mirror element consists of a plurality of hollow roof mirrors or hollow retroreflector mirrors which are arranged cylindrically about an axis of rotation in such a way that a beam incident perpendicular to the axis of rotation is reflected in a parallel direction onto the second mirror element, which is a plane mirror.

A similar arrangement comprising a star-shaped rotating planar reflector combined with a plane retroreflector is also described by G.-J Kim et al., "A Novel Optical Delay Line Using a Rotating Planar Reflector for Fast Measurement of a Terahertz Pulse", J. Korean Phy. Soc., 56(6):1763-1766, (2010), DOI:10.3938/jkps.56.1763.

Both the second mirror element in DE 3446014 A1 as well as the retroreflector used by G.-J. Kim et al. reflect the beam back onto itself. Such an arrangement is easy to align, but it causes a part of the reflected beam to be directed back towards the light source from which the beam originates, which is particularly problematic if the light source is a laser, since such back-reflections may severely compromise the stability of the laser or even cause damage. Furthermore, the beam is only reflected twice off each surface of the rotating component, which limits the maximum path length difference for a given footprint of the arrangement.

### SUMMARY OF THE INVENTION

In a first aspect, it is an object of the present invention to provide an optical delay line assembly that enables fast scanning of a delay path length. It is another object of the present invention to provide an optical delay line assembly that provides means to increase the path length difference without having to increase the footprint of the optical delay line. Furthermore, it is another object of the present invention to provide an optical delay line assembly that is configurable to prevent back-reflections of an optical beam towards its source when the optical beam propagates through the optical delay line assembly.

These and other objects are achieved by an optical delay line assembly according to claim 1. Further embodiments of the invention are laid down in the dependent claims.

An optical delay line assembly is disclosed, the optical delay line assembly comprising:
a rotatable mirror device defining a rotation axis, wherein the rotatable mirror device comprises at least one mirror pair, each mirror pair comprising a first plane mirror surface with a first surface normal and a second plane mirror surface with a second surface normal, wherein the surface normal of the first plane mirror surface is perpendicular to the surface normal of the second plane mirror surface, and
a reflector arrangement comprising at least one fixed reflector device.

The reflector arrangement and the rotatable mirror device are arranged such that the rotatable mirror device is able to assume at least one range of delay-scanning angular positions for which an optical delay-line beam coupled into the delay line assembly along an incoming optical axis is able to propagate in at least a single pass along a rotation-dependent delay path between a spatially fixed input point located on the incoming optical axis and a spatially fixed output point located on an outgoing optical axis.

According to the present invention, the reflector arrangement is configured and arranged such that the single pass along the rotation-dependent delay path comprises:
at least two reflections off the first plane mirror surface of each mirror pair, wherein the at least two reflections off the first plane mirror surface are offset from each other in a direction parallel to the rotation axis,
at least two reflections off the second plane mirror surface of each mirror pair, wherein the at least two reflections off the second plane mirror surface are offset from each other in a direction parallel to the rotation axis, and
at least two reflections off each fixed reflector device of the reflector arrangement, wherein the at least two reflections off each reflector device are offset from each other in a direction parallel to the rotation axis.

By using a rotatable mirror device, an arbitrary number of scans can be performed consecutively without a having to linearly accelerate or decelerate a mechanical component, which enables rapid scanning and a high data acquisition rate. When the rotatable mirror device is in a delay-scanning angular position, an optical delay-line beam doing a single pass along the rotation-dependent beam path is reflected back and forth between the rotatable mirror device and the reflector arrangement without being reflected onto itself, which minimizes the risk of back-reflections being sent to a light source from which the optical delay-line beam originates. By introducing multiple reflections on each plane mirror surface of the rotatable mirror device and on each fixed reflector device, the rotation-dependent delay path length is increased without an increase in footprint. To further increase the rotation dependent delay-path length in a scenario where potential back-reflections are not considered to be an issue, the optical delay line assembly may also be configured to enable a double pass along the rotation-dependent beam path, i.e. where the optical delay-line beam may propagate from the input point to the output point (first pass) and back from the output point to the input point (second pass). To realize such a double-pass configuration, the optical delay line assembly may comprise a back-reflecting plane mirror that is arranged perpendicular to the outgoing optical axis to reflect the optical delay-line beam back from the output point towards the input point.

In order to achieve such a rotation-dependent delay path, each fixed reflector device may comprise a first section, the first section comprising at least one pair of reflective surfaces, each pair comprising a first reflective surface and a second reflective surface, wherein each of the first reflective surface and the second reflective surface has a surface normal that is inclined by an inclination angle with respect to the rotation axis. Preferably, the surface normal of the first reflective surface is perpendicular to the surface normal of the second reflective surface, while the surface normal of the first reflective surface and the surface normal of the second reflective surface both lie in a common plane with the rotation axis. Furthermore, the surface normal of the first plane mirror surface and the surface normal of the second plane mirror surface of each mirror pair of the rotatable mirror device are preferably each perpendicular to the rotation axis. In such a configuration, the incoming optical axis is preferably perpendicular to the rotation axis to enable an optical delay-line beam entering the optical delay line assembly along the incoming optical axis to always propagate in a plane perpendicular to the rotation axis when being reflected back and forth from the rotatable mirror device to the reflector arrangement and vice versa, which facilitates an initial alignment of the optical delay-line beam with respect to the optical delay line assembly. When the rotatable mirror device is rotated through the at least one range of delay-scanning angular positions, such a configuration enables the optical delay-line beam to move across the first section of the fixed reflector device in a line perpendicular to the rotation axis and hence to experience a rotation-dependent delay path length that is nonlinearly dependent on the delay-scanning angular position.

The inclination angle by which the surface normal of the first reflective surface is inclined with respect to the rotation axis may be any inclination angle larger than 0° and smaller than 90°. Preferably, said inclination angle is 45°, to enable the optical delay-line beam to be reflected from the first reflective surface to the second reflective surface in a direction parallel to the rotation axis, which further facilitates alignment.

In addition, each fixed reflector device may comprise a second section, the second section being arranged adjacent to the first section in a direction tangential to the rotation axis. In the present disclosure, the term "tangential to the rotation axis" is to be understood as tangential to a circle that lies in a plane perpendicular to the rotation axis and that has its center on the rotation axis.

The second section may comprise at least one pair of reflective surfaces, each pair comprising a first reflective surface and a second reflective surface, wherein each of the first reflective surface and the second reflective surface has a surface normal that is inclined by an inclination angle with respect to the rotation axis and wherein the surface normal of the first reflective surface is perpendicular to the surface normal of the second reflective surface. The inclination angle by which the surface normal of the first reflective surface is inclined with respect to the rotation axis may be any inclination angle larger than 0° and smaller than 90°. Preferably, the inclination angle is 45°.

Ideally, the at least one pair of reflective surfaces of the second section is offset in a direction parallel to the rotation axis with respect to the at least one pair of reflective surfaces of the first section. Such an offset in a direction parallel to the rotation axis results in a ladder-type structure that, when the rotatable mirror device is in a delay-scanning angular position, can enable the optical delay-line beam to be reflected from the second section back to the rotatable mirror device with an offset in a direction parallel to the rotation axis, and subsequently to be reflected from the rotatable mirror device again to the first section, where the optical delay-line beam may then experience a further offset in said direction parallel to the rotation axis via reflection from a further pair of reflective surfaces of the first section back towards the mirror pair and again towards the second section.

Preferably, a bottom surface of the second section is offset with respect to a bottom surface of the first section in a direction parallel to the rotation axis, such that a void space occurs underneath the bottom surface of the second section, through which void space the optical delay-line beam is able to pass.

The incoming optical axis along which the optical delay-line beam may be coupled into the optical delay-line assembly preferably lies within said void space, wherein the incoming optical axis is preferably parallel to a projection of the surface normals of the reflective surfaces of the fixed reflector device onto a plane perpendicular to the rotation axis.

Each fixed reflector device may further comprise a third section, the third section being arranged adjacent to the second section in a direction tangential to the rotation axis. The third section may comprise at least one pair of reflective surfaces, each pair comprising a first reflective surface and a second reflective surface, wherein each of the first reflective surface and the second reflective surface has a surface normal that is inclined by an inclination angle with respect to the rotation axis and wherein the surface normal of the first reflective surface is perpendicular to the surface normal of the second reflective surface. The inclination angle by which the surface normal of the first reflective surface is inclined with respect to the rotation axis may be any inclination angle larger than 0° and smaller than 90°. Preferably, the inclination angle is 45°.

Ideally, the at least one pair of reflective surfaces of the third section is aligned in a direction parallel to the rotation axis with the at least one pair of reflective surfaces of the first section. In particular, the third section may be structured identically to the first section, such that each fixed reflector device comprising said first, second and third section has a symmetry axis situated along a middle axis of the second section, wherein the symmetry axis is parallel to the rotation axis.

The reflector arrangement may comprise a first fixed reflector device and a second fixed reflector device, wherein the first fixed reflector device and the second fixed reflector device are each arranged in a direction tangential to the rotation axis. In such a case, the rotatable mirror device preferably comprises a first mirror pair facing the first fixed reflector device and a second mirror pair facing the second fixed reflector device when the rotatable mirror device is in the at least one range of delay-scanning angular positions in order to increase the rotational delay path length and hence also to increase the rotation-dependent delay path length difference between a minimum length and a maximal length achievable over one scan through the at least one range of delay-scanning angular positions, ultimately increasing the spectral resolution when the optical delay line assembly is used in a Fourier-transform spectrometer.

In particular, the first fixed reflector device and the second fixed reflector device may be arranged radially opposite to each other with respect to the rotation axis.

Preferably, the first fixed reflector device and the second fixed reflector device are arranged at an equal distance from the rotation axis.

The rotatable mirror device may comprise an even number of mirror pairs, wherein each mirror pair is arranged radially opposite to another mirror pair with respect to the rotation axis.

The even number of mirror pairs may be arranged in a star-shaped form around the rotation axis. By rotating the rotatable mirror device around the rotation axis, the rotation-dependent delay path may be scanned from the minimum length to the maximum length at a scan rate that scales with the number of mirror pairs for a fixed angular velocity of the rotatable mirror device.

In order to further multiply the rotation-dependent delay path difference, additional fixed reflector devices may be arranged tangentially to the rotation axis, wherein each fixed reflector device ideally faces one mirror pair when the rotatable mirror device is in a delay-scanning angular position.

In a configuration where the reflector arrangement comprises at least two fixed reflector devices, the optical delay line assembly may comprise a first routing mirror arranged to pick up the optical delay-line beam after the optical delay-line beam has experienced the at least two reflections off the first fixed reflector device, the at least two reflections off the first plane mirror surface and the at least two reflections off the second plane mirror surface of the first mirror pair. The optical delay line assembly may further comprise at least one additional routing mirror for routing the optical delay-line beam towards the second mirror pair of the rotatable mirror device to enable the optical delay-line beam to experience the at least two reflections off the first plane mirror surface of the second mirror pair, the at least two reflections off the second plane mirror surface of the second mirror pair and the least two reflections off the second fixed reflector device.

The first routing mirror may be arranged on, in particular attached to, the second section of the first fixed reflector device, and/or the at least one additional routing mirror may be arranged on, in particular attached to, the second section of the second fixed reflector device.

Alternatively, the first routing mirror and/or the at least one additional routing mirror may be arranged radially further away from the rotation axis than the first fixed reflector device and the second fixed reflector device, which facilitates access the routing mirrors for alignment purposes.

In another alternative, the first routing mirror and/or the at least one additional routing mirror may be arranged radially closer to the rotation axis than the first fixed reflector device and the second fixed reflector device if it is desired to keep the optical delay line assembly as compact as possible.

In a configuration where the reflector arrangement comprises at least two fixed reflector devices, where each fixed reflector device has a first section, a second section, and optionally a third section as described above, the first fixed reflector device and the second fixed reflector device may be configured to enable the optical delay-line beam to be reflected from the second section of the first fixed reflector device towards the second section of the second fixed reflector device when the rotatable mirror device is in the at least one range of delay-scanning angular positions.

In particular in a case where the first fixed reflector device and the second fixed reflector device are arranged radially opposite to each other with respect to the rotation axis, the second section of each fixed reflector device may be configured such that the optical delay-line beam is reflected from the second section of the first fixed reflector device directly to the second section of the second fixed reflector in a plane that does not intersect with the rotatable mirror device, the plane for instance being located above the rotatable mirror device, wherein the optical delay-line beam crosses the rotation axis.

Alternatively, the optical delay line assembly may comprise at least one routing mirror for routing the optical delay-line beam from the second section of the first fixed reflector device to the second section of the second fixed reflector device, said at least one routing mirror being preferably arranged radially closer to the rotation axis than the first fixed reflector device and the second fixed reflector device. In particular, said at least one routing mirror may be located above the rotatable mirror device.

In a configuration where the reflector arrangement comprises more than two fixed reflector devices, additional routing mirrors may be used to route the optical delay line beam from one fixed reflector device to another fixed reflector device and/or from one fixed reflector devices to the rotatable mirror device and/or from one mirror pair of the rotatable mirror device to another mirror pair of the rotatable mirror device, wherein a first subset of said routing mirrors may be located closer to the rotation axis than the fixed reflector devices, while a second subset of said routing mirrors of may be located further away from the rotation axis than the fixed reflector devices.

In the present disclosure, the term "routing mirrors" is used for mirrors that may be mounted on mounts that allow for a mechanical alignment, but which ― in contrast to the rotatable mirror device - are not supposed to move during operation of the optical delay line assembly.

The rotatable mirror device and/or each fixed reflector device may each consist of milled metal pieces, wherein the metal may be aluminium, a beryllium-copper alloy, titanium or any similar metal which is preferably light, mechanically stable and which can be manufactured with a high surface quality. The rotatable mirror device and/or each fixed reflector device may each be made from one piece, or may consist of several milled pieces attached together by means of screws or adhesives. The plane mirror surfaces of the rotatable mirror device and/or the reflective surfaces of the fixed reflector device may be polished surfaces of the respective milled metal piece. Alternatively, a reflective optical coating, such as e.g. a silver coating, a gold coating or a dielectric coating, may be applied to the surfaces of the milled metal piece to form the plane mirror surface of the rotatable mirror device and/or the reflective surfaces of the fixed reflector devices.

In a second aspect, the present invention provides an optical spectrometer comprising an optical delay line assembly as described above.

Such an optical spectrometer comprises:
the optical delay line assembly of the type mentioned above;
a drive mechanism for driving a rotation of the rotatable mirror device of the optical delay line assembly;
a main light source generating an optical beam;
a main optical detector suitable to detect light from the main light source, and
an acquisition system configured to read out the main optical detector.

The optical spectrometer may comprise at least two beam splitters, wherein a first beam splitter is configured split the optical beam originating from the main light source into a delay-line beam propagating on a variable path comprising the rotation-dependent delay path within the optical delay line assembly, and into a static-line beam propagating on a static path, wherein a second beam splitter is configured to superpose the delay-line beam with the static-path beam to yield a recombined beam after the delay-line beam has propagated through the optical delay line assembly and wherein the recombined beam impinges on the at least one main optical detector.

The drive mechanism for driving a rotation of the rotatable mirror device of the optical delay line assembly may be an electrical motor, an air spindle motor or any other suitable means for driving a motor shaft connected to the rotatable mirror device. To reduce friction and enable fast rotation, the motor may be bearingless, e.g. the motor may be configured as a magnetically levitated motor.

Optionally, a measurement sample, in particular a gas or a liquid, may be placed such as to enable the delay-line beam, the static-path beam or the recombined beam to interact with the measurement sample.

The main light source may be a thermal light source or a weakly coherent light source, in particular a superluminescent diode.

Alternatively, the main light source may be a coherent light source such as a laser. Possible lasers include quantum cascade lasers, interband cascade lasers, solid-state lasers, fiber lasers, gas lasers or any other type of lasers. To enable high-precision spectroscopic measurements, the laser may emit a frequency comb, the laser frequency comb preferably having a stabilized repetition rate and/or a stabilized carrier-envelope offset frequency.

Ideally, the optical delay-line beam is collimated when entering the optical delay line assembly and has a beam diameter below a critical beam diameter, the critical beam diameter being reached when the optical delay-line beam starts to be spatially clipped when propagating along the rotation-depend delay path, wherein the critical diameter depends on the location of the input point with respect to the plane mirror surfaces of the at least one mirror pair of the rotatable mirror device.

The second beam splitter may be configured to superpose the delay-line beam with the static-path beam to yield a first recombined beam and a second recombined beam after the delay-line beam has propagated through the optical delay line assembly.

The optical spectrometer may further comprise:
a third beam splitter configured to split off a portion of the static-path beam, wherein said portion of the static-path beam propagates on an additional static path;
a fourth beam splitter configured to split off a portion of the delay-line beam after the delay-line beam has travelled through the optical delay line assembly, and
a fifth beam splitter configured to superpose said portion of the static-path beam and said portion of the delay-line beam to yield a third recombined beam and a fourth recombined beam.

Preferably, the first recombined beam or the second recombined beam impinges on a first main optical detector, while the third recombined beam or the fourth recombined beam impinges on a second main optical detector.

The optical spectrometer may further comprise:
a reference light source generating a reference beam, wherein the reference light source is a spectrally narrow-band laser, preferably a single-frequency laser;
a reference detector suitable to detect light from the reference light source;
a first reference-path beam splitter, wherein the first reference-path beam splitter is configured to split the reference beam originating from the reference light source into a delay-line reference beam co-propagating with the main optical delay-line beam on the rotation-dependent delay path, and into a static-line reference beam propagating on a static reference path, and
a second reference-path beam splitter, the second reference-path beam splitter being configured to superpose the delay-line reference beam with the static-path reference beam to yield a recombined reference beam after the delay-line reference beam has propagated through the optical delay line assembly. The recombined reference beam preferably impinges on the reference detector, wherein the acquisition system is ideally further configured to read out the reference detector.

The optical spectrometer may further comprise a plurality of steering mirrors to align the optical beam, the optical delay-line beam and the static-path beam in desired directions. Furthermore the optical spectrometer may comprise a filter to separate the optical delay-line beam from the delay-line reference beam after their co-propagation through the optical delay line assembly in order to be able to send the optical delay-line beam and the delay-line reference beam onto different detectors. Said filter may for instance be a dichroic filter in case the main light source and the reference light source operate at different wavelengths, or a polarization-based filter.

In a third aspect, the present invention provides a measurement method using the optical spectrometer described above.

The measurement method comprises:
rotating the rotatable mirror device using the drive mechanism, and
acquiring a signal from each main optical detector using the acquisition system while the rotatable mirror device is rotating.

The signal acquired form each main optical detector may be a main interferogram, which in a further step of the method may by Fourier-transformed to obtain a spectrum.

The rotation-dependent optical delay path length depends nonlinearly on the rotation angle of the rotatable mirror device. Hence, for a constant angular velocity of the rotation, the main interferograms show oscillations that are not periodic on a laboratory time scale on which the main interferogram is acquired by the acquisition system.

In order to convert the laboratory time scale into an axis representing the rotation-dependent optical delay path length, and to correct the main interferograms for any mechanical instabilities or irregularities during the rotation of the rotatable mirror device, the method may further comprise:
acquiring a reference interferogram from the reference detector using the acquisition system,
resampling the main interferogram using the reference interferogram to obtain a resampled interferogram, and
Fourier-transforming the resampled main interferogram to obtain a spectrum.

Resampling the main interferogram using the reference interferogram may comprise resampling the main interferogram on the zero-crossings of the reference interferogram. Furthermore, several main interferograms may be co-added to obtain an averaged interferograms before or after resampling in order to improve the signal-to-noise ratio.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Figs. 1a, 1b: show schematic top views of an optical delay line assembly according to a first embodiment of the present invention;
- Fig. 1c: shows a rotation-dependent delay path difference as a function of a rotation angle;
- Fig. 1d: shows a side view of a first embodiment of a fixed reflector device according to the present invention;
- Fig. 1e: shows a front view of the first embodiment of the fixed reflector device shown in Fig. 1d;
- Fig. 1f: shows a perspective view of the first embodiment of the fixed reflector device shown in Figs. 1d and 1e;
- Fig. 1g: shows a perspective view of the first embodiment of the fixed reflector device shown in Figs. 1d and 1e with an additional back-reflecting plain mirror;
- Fig. 1h: shows a perspective view of the optical delay line assembly according to the first embodiment shown in Fig. 1a;
- Fig. 1i, 1j: show a perspective view of the first embodiment of the fixed reflector device with a routing mirror directly attached to the fixed reflector device;
- Fig. 2a: shows a schematic top view of an optical delay line assembly according to a second embodiment of the present invention;
- Fig. 2b: shows a perspective view of the second embodiment of the fixed reflector device shown in Fig. 2a;
- Fig. 2c: shows a perspective view of the optical delay line assembly according to the second embodiment shown in Fig. 2a;
- Figs. 3a, 3b: show schematic top views of an optical delay line assembly according to a third embodiment of the present invention;
- Fig. 3c: shows a perspective view of the optical delay line assembly according to the third embodiment shown in Figs. 3a and 3b;
- Fig. 4a: shows a top view of an optical delay line assembly according to a fourth embodiment of the present invention;
- Fig. 4b: shows a perspective view of an optical delay line assembly according to the fourth embodiment of the present invention shown in Fig. 4a;
- Fig. 5a: shows a schematic overview of a first embodiment of an optical spectrometer comprising an optical delay line assembly according to the present invention.
- Fig. 5b: shows a schematic overview of a second embodiment of an optical spectrometer comprising an optical delay line assembly according to the present invention;
- Fig. 6: illustrates a method for measuring optical spectra using an optical spectrometer comprising an optical delay line assembly according to the present invention;
- Fig. 7a: shows a first excerpt of a reference interferogram versus a laboratory time axis measured with an optical spectrometer according to the present invention;
- Fig. 7b: shows a second excerpt of the measured reference interferogram at a later time on the laboratory time axis;
- Fig. 7c: shows a spectrogram obtained by Fourier-transforming the interferogramshown in Fig. 6a and Fig. 6b;
- Fig. 8a: shows a main interferogram versus a laboratory time axis measured with an optical spectrometer according to the present invention;
- Fig. 8b: shows a resampled interferogram vs. a rotation-dependent delay path length difference;
- Fig. 8c: shows an averaged interferogram obtained after co-adding 20 main resampled interferograms, and
- Fig. 9: a spectrum obtained by Fourier-transforming the averaged interferogram depicted in Fig. 7c.

### DESCRIPTION OF PREFERRED EMBODIMENTS

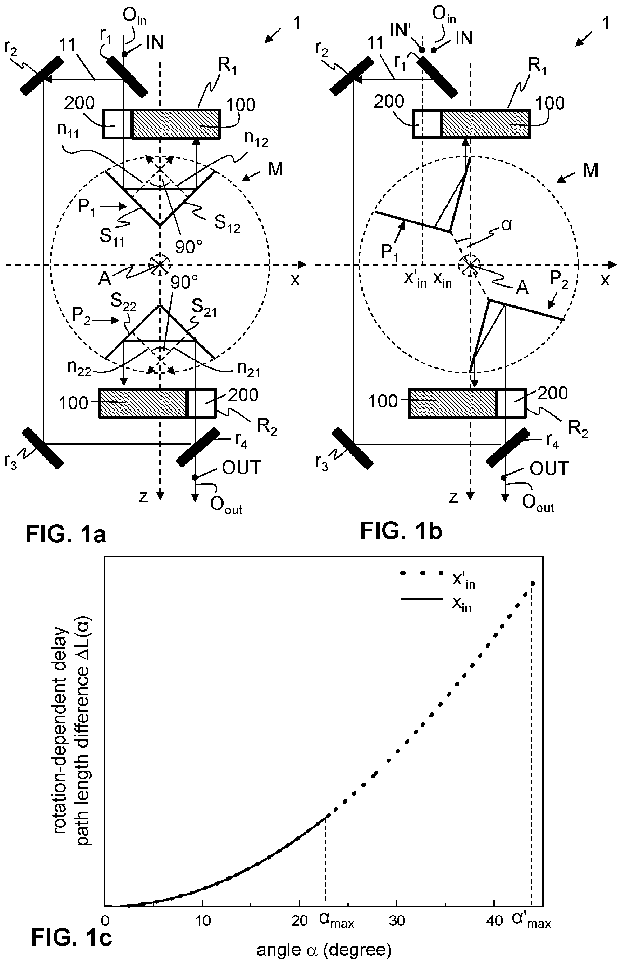

Fig. 1a shows a schematic top view of an optical delay line assembly 1 according to a first embodiment of the present invention. The optical delay line assembly 1 comprises a rotatable mirror device M defining a rotation axis A. Without loss of generality, a Cartesian coordinate system with an x-direction, a y-direction and a z-direction is shown in Fig. 1a, wherein the coordinate system has its origin at the rotation axis A and wherein the rotation axis A extends along the y-direction. According to the present invention, the rotatable mirror device M comprises at least one mirror pair P₁. The mirror pair P₁ comprises a first plane mirror surface S₁₁ with a first surface normal n₁₁ and a second plane mirror surface S₁₂ with a second surface normal n₁₂, wherein the surface normal n₁₁ of the first plane mirror surface S₁₁ is perpendicular to the surface normal n₁₂ of the second plane mirror surface S₁₂. Here, the surface normal n₁₁ of the first plane mirror surface S₁₁ and the surface normal n₁₂ of the second plane mirror surface S₁₂ are furthermore each perpendicular to the rotation axis A and both lie in the x-z-plane. In this schematic view, a second mirror pair P₂ is shown, which is arranged radially opposite to the mirror pair P₁ with respect to the rotation axis A. The second mirror pair P₂ also comprises a first plane mirror surface S₂₁ and a second plane mirror surface S₂₂, wherein each of the first reflective surface S₂₁ and the second plane mirror surface S₂₂ has a surface normal n₂₁,n₂₂ that is perpendicular to the rotation axis A and wherein the surface normal n₂₁ of the first plane mirror surface S₂₁ is perpendicular to the surface normal n₂₂ of the second plane mirror surface S₂₂.

In this first embodiment, the optical delay line assembly 1 further comprises two fixed reflector devices R₁,R₂ that are arranged at a distance of the rotation axis A, wherein the distance is sufficiently large not to impede rotation of the rotatable mirror device M. An optical delay-line beam 11 enters the optical delay line assembly 1 at an input point IN along an incoming optical axis Oᵢₙ, and propagates in a single pass along a rotation-dependent delay path L before exiting the optical delay line assembly at an output point OUT along an outgoing optical axis Oₒᵤₜ. The input point IN and the output point OUT may each be defined by an aperture or by a window (not shown here) through which the optical delay line beam may enter or exit the optical delay line assembly 1. Alternatively, the input point IN and the output point OUT may be arbitrarily defined spatially fixed points located on the incoming optical axis Oᵢₙ and on the outgoing optical axis Oₒᵤₜ, respectively. Upon entering the optical delay line assembly 1, the optical delay-line beam 11 is reflected off the first plane mirror surface S₁₁ towards the second plane mirror surface S₁₂ and from the second plane mirror surface S₁₂ towards the fixed retroreflector device R₁. The optical delay-line beam 11 is then reflected back by the fixed retroreflector device R₁ with an offset along the y-direction. This first embodiment further comprises a first mirror r₁ to pick up the optical delay-line beam 11 after the latter has been reflected off the first mirror pair P₁ (facing the fixed reflector device R₁) in a direction antiparallel to the input direction, as well as three additional routing mirrors r₂,r₃,r₄ for routing the optical delay-line beam 11 towards the second mirror pair P₂ (facing the fixed reflector device R₂). In this configuration, the routing mirrors r₁,r₂,r₃,r₄ are arranged radially further away from the rotation axis A than the first fixed reflector device R₁ and the second fixed reflector device R₂.

Fig. 1b shows a schematic top view of the optical delay line assembly 1 of the first embodiment of Fig. 1a, but where the rotatable mirror device M has been rotated by a rotation angle α around the rotation axis A compared to the situation depicted in Fig. 1a, where α = 0°. By increasing the rotation angle a, the length of the rotation-dependent delay path L increases until a maximum angle αₘₐₓ is reached, at which the optical delay beam wanders off the first mirror pair and/or the fixed retroreflector.

The maximum angle αₘₐₓ depends on the x-coordinate value of the input point IN.

Fig. 1c shows the rotation-dependent delay path length difference ΔL=L(α = 0°)-L(a) as a function of the rotation angle α for a first input point IN with a first x-coordinate value xᵢₙ and for a second input point IN' with a second x-coordinate value x'ᵢₙ, wherein xᵢₙ<0, x'ᵢₙ<0 and x'ᵢₙ< xᵢₙ. As can be seen from Fig. 1c, the maximum angle α'ₘₐₓ, which limits the delay-scanning range of angular positions for the input point IN', is larger than the maximum angle αₘₐₓ, which limits the delay-scanning range of angular positions for the input point IN. Hence, in this case the maximum achievable rotation-dependent delay path length difference is larger in a situation with input point IN' than in a situation with input point IN.

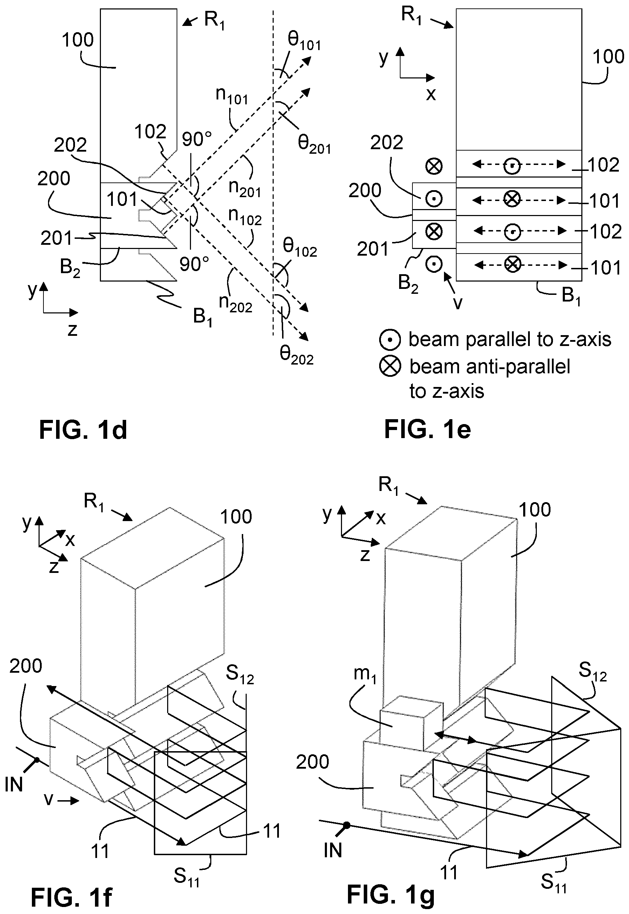

Figs. 1d, 1e, 1f and 1g show different views of the first embodiment of the fixed reflector device R₁, wherein Fig. 1d shows a side view, Fig. 1e shows a front view and Figs. 1f and 1g show perspective views. The fixed reflector device R₁ comprises a first section 100, the first section 100 in this case comprising two pairs of reflective surfaces, the first reflective surface 101 has a surface normal n₁₀₁ that is inclined here by an inclination angle of θ₁₀₁=45° and the second reflective surface 102 has a surface normal n₁₀₂ that is inclined by an inclination angle of θ₁₀₂=135° with respect to the y-direction (the direction parallel to the rotation axis A) and wherein the surface normal n₁₀₁ of the first reflective surface 101 is perpendicular to the surface normal n₁₀₂ of the second reflective surface 102. The fixed reflector device R₁ comprises a second section 200, the second section comprising a pair of reflective surfaces, the first reflective surface 201 has a surface normal n₂₀₁ that is inclined here by an inclination angle of θ₂₀₁=45° and the second reflective surface 202 has a surface normal n₂₀₂ that is inclined by an inclination angle of θ₂₀₂=135° with respect to the y-direction wherein the surface normal n₂₀₁ of the first reflective surface 201 is perpendicular to the surface normal n₂₀₂ of the second reflective surface 202. The second section 200 is arranged adjacent to the first section 100 in x-direction. A bottom surface B₂ of the second section 200 is offset with respect to a bottom surface B₁ of the first section 100 in a direction parallel to the rotation axis A, such that a void space v occurs underneath the bottom surface B₂ of the second section 200, through which void space v an optical delay-line beam 11 is able to pass.

The dotted and crossed circles in Fig. 1e indicate the direction of the optical delay-line beam as it is reflected off the reflective surfaces 101,102,201,202, wherein the dotted circle represents a direction parallel to the z-axis and wherein the crossed circle represents a direction anti-parallel to the z-axis. As the rotatable mirror device M is rotated around the rotation axis A as shown in Fig. 1b, the optical delay-line beam 11 moves along the x-direction on the reflective surfaces 101,102 of the first section 100 as indicated by the dashed arrows in Fig. 1e, while the location of the reflections off the reflective surfaces 201,202 of the second section 200 stays fixed during the rotation.

Fig. 1f shows a perspective view of the first embodiment of the fixed reflector device R₁ shown in Figs. 1d and 1e, as well as the first plane mirror surface S₁₁ and the second plane mirror surface S₁₂ of the first mirror pair P₁ of the rotatable mirror device M. The optical delay-line beam 11 is schematically drawn to show its back-and forth propagation between the fixed reflector device R₁ and the mirror pair P₁ of the rotatable mirror device M. As can be seen in this embodiment, the optical delay-line beam 11 passes through the void space v and in total experiences four reflections off the first plane mirror surface S₁₁, wherein the four reflections experiences off the first plane mirror surface S₁₁ are offset from each other in a direction parallel to the rotation axis, four reflections off the second plane mirror surface S₁₂, wherein the four reflections off the second plane mirror surface S₁₂ are offset from each other in a direction parallel to the rotation axis A, and six reflections off the fixed reflector device R₁ (four off the first section 100 and two off the second section 200), wherein the four reflections off the first section 100 are offset from each other in a direction parallel to the rotation axis A, and wherein the two reflections off the first section 200 are offset from each other in a direction parallel to the rotation axis A.

Fig. 1g shows the first embodiment of the fixed reflector device R₁ as shown in Figs. 1f with a back-reflecting mirror m₁ arranged above the reflective surfaces 201,202 of the second section 200. Since the back-reflecting plane mirror m₁ is arranged perpendicular to the optical delay line beam, such a configuration enables a double pass along the rotation-dependent delay path, i.e. the optical delay-line beam 11 is reflected onto itself and propagates back to the input point IN.

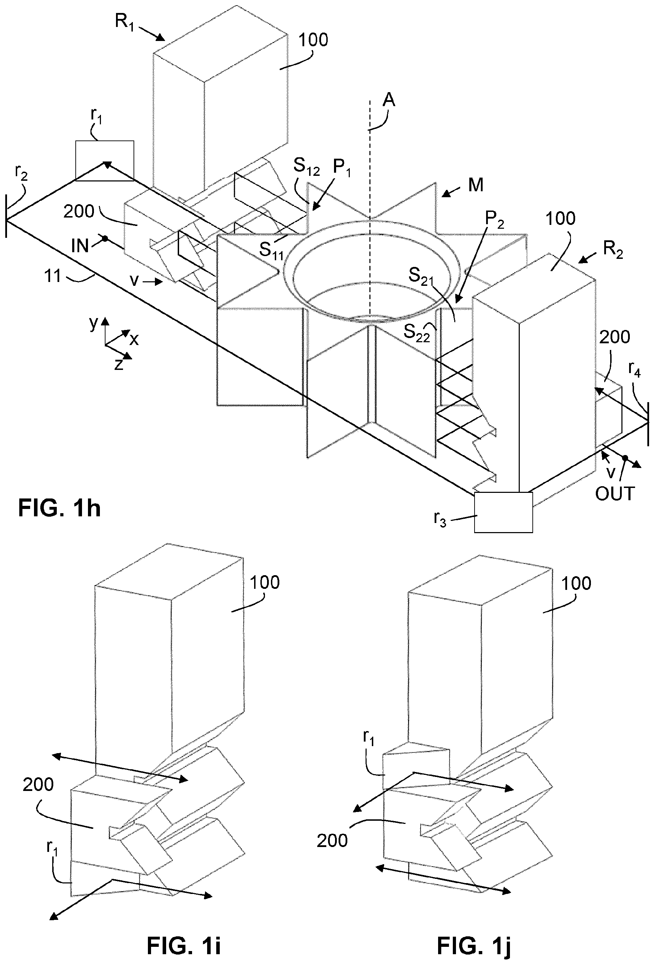

Fig. 1h shows a perspective view of the optical delay line assembly 1 according to the first embodiment shown in Fig. 1a. The first mirror pair P₁ and the second mirror pair P₂ are connected to six additional mirror pairs arranged in a star-shaped form. In this case, the first plane mirror surface of each mirror pair shares an edge (i.e. an apex of the star-shaped form) with the second plane mirror of its neighbouring mirror pair. Hence, eight delay-path scans can be obtained for one 360°-rotation of the rotatable mirror device M around the rotation axis A. A first routing mirror r₁ picks up the optical delay-line beam 11 after the latter has been reflected off the first mirror pair P₁ (facing the fixed reflector device R₁) in a direction antiparallel to the input direction, and three additional routing mirrors r₂,r₃,r₄ route the optical delay-line beam 11 towards the second mirror pair P₂ which is facing the fixed reflector device R₂, wherein the fixed reflector device R₂ is configured identically to the first fixed reflector device R₁ and is arranged radially opposite to the latter. Using two fixed reflector devices fixed reflector device R₁, R₂ as shown here doubles the rotation-dependent delay path length difference ΔL compared to an arrangement comprising only one fixed reflector device. Since the first routing mirror r₁ and the three additional routing mirrors r₂,r₃,r₄ are arranged radially further away from the rotation axis A than the first fixed reflector device R₁ and the second fixed reflector device R₂, this particular embodiment of the optical delay line assembly is easy to align. Furthermore, collimation optics may be inserted between the routing mirror r₂ and the routing mirror r₃ to re-collimate the optical delay-line beam if necessary.

Fig. 1i and Fig. 1j show the first embodiment of the fixed reflector device R₁ with a routing mirror r₁ directly attached to the second section 200 of the fixed reflector device R₁, which enables a more compact configuration than with an externally arranged routing mirror r₁ as shown in Fig. 1h. In Fig. 1i, the attached routing mirror r₁ is arranged below the second section 200, while in Fig. 1j, the attached routing mirror r₁ is arranged above the second section 200. In these examples, the routing mirror r₁ is arranged to reflect the optical delay beam under a 90°-angle.

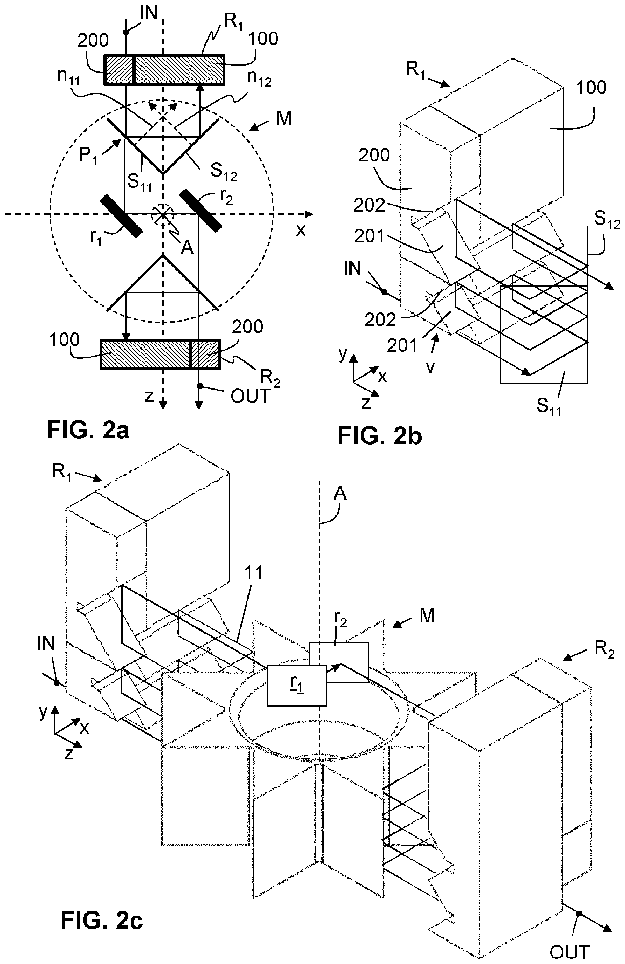

Figs. 2a shows a schematic top view of an optical delay line assembly 1 according to a second embodiment of the present invention. This second embodiment comprises two routing mirrors r₁, r₂. The two routing mirrors r₁, r₂ are arranged between the two fixed reflector devices R₁, R₂ for routing the optical delay-line beam 11 from the second section 200 of the first fixed reflector device R₁ to the second section 200 of the second fixed reflector device R₂. The second embodiment of the fixed reflector R₁ shown here in a perspective view in Fig. 2b comprises a second section 200 with two pairs of reflective surfaces 201, 202 instead of only one pair of reflective surfaces in the first embodiment of the fixed reflector device R₁, shown in Fig. 1d-g. Instead of being picked up by a routing mirror after being reflected in a direction anti-parallel to the input direction as in the first embodiment, here, the optical delay-line beam 11 is reflected off the second pair of reflective surfaces of the second section 200 of the first fixed reflector device R₁ in a direction parallel to the input direction (here parallel to the z-axis). In Fig. 2b, the first plane mirror surface S₁₁ and the second plane mirror surface S₁₂ of the first mirror pair P₁ of the rotatable mirror device M are also shown. The optical delay-line beam 11 is schematically drawn to show its back-and forth propagation between the fixed retroreflector device R₁ and the mirror pair P₁ of the rotatable mirror device M. As can be seen in this second embodiment, the optical delay-line beam 11 passes through the void space v underneath the second section 200 and in total experiences four reflections off the first plane mirror surface S₁₁, wherein the four reflections experienced off the first plane mirror surface S₁₁ are offset from each other in a direction parallel to the rotation axis A, four reflections off the second plane mirror surface S₁₂, wherein the four reflections off the second plane mirror surface S₁₂ are offset from each other in a direction parallel to the rotation axis A, four reflections off the first section 100 of the fixed reflector device R₁, wherein the four reflections off the first section 100 of the fixed reflector device R₁ are offset from each other in a direction parallel to the rotation axis A, and four reflections off the second section 200 of the fixed reflector device R₁, wherein the four reflections off the second section 200 of the fixed reflector device R₁ are offset from each other in a direction parallel to the rotation axis A.

Fig. 2c shows a perspective view of the optical delay line assembly 1 according to the second embodiment shown in Fig. 2a comprising two fixed reflector devices R₁,R₂ of the second embodiment as shown in Fig. 2b (i.e. the second fixed reflector device R₂ is configured identically to the first fixed reflector device R₁). The rotatable mirror device M has the same star-shaped form as in the first embodiment shown in Fig. 1g. The routing mirrors r₁, r₂ are arranged between the two fixed reflector devices R₁,R₂ on a plane that lies above the rotatable mirror device, which leads to a more compact delay line assembly 1 compared to the first embodiment shown in Fig. 1g. However, since in this case, the routing mirrors r₁, r₂ have to be arranged close to the rotation axis A, more complex mounting solutions have to be employed to mount the routing mirrors r₁, r₂ here and their initial alignment is less straight-forward than in the first embodiment.

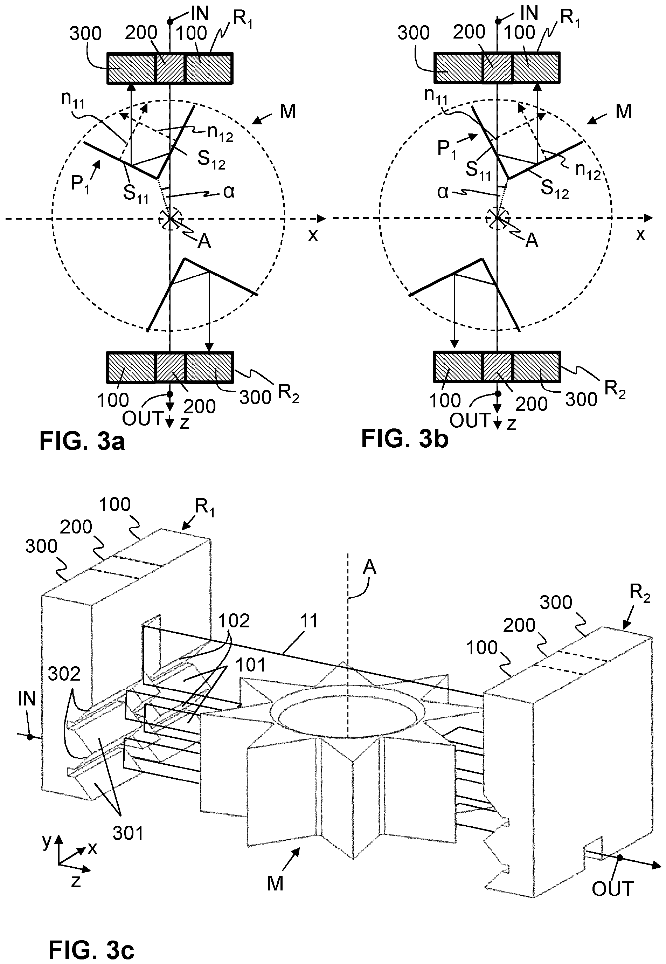

Figs. 3a and 3b show schematic top views of an optical delay line assembly 1 according to a third embodiment of the present invention. Compared to the first embodiment and the second embodiment, this embodiment does not comprise any routing mirrors. In this third embodiment, the fixed reflector devices R₁, R₂ each comprise a third section 300, wherein the third section 300 is structurally identical to the first section 100 and is arranged adjacent to the second section 200 in such a manner that the pairs of reflective surfaces of the third section 300 are aligned in y-direction with the pairs of reflective surfaces of the first section 100. The second sections 200 of the reflector devices R₁,R₂ in this third embodiment are structurally identical to the second sections 200 of the fixed reflector devices R₁,R₂ of the second embodiment shown in Figs. 2b and 2c. However, in this third embodiment, the second section 200 of the first fixed reflector devices R₁ is arranged radially opposite to the second section 200 of the second fixed reflector devices R₂. While in the first and second embodiment, a rotation angle of α=0 corresponds to a delay-scanning angular position of the rotatable mirror device M, i.e. an angular position for which the optical delay-line beam exits at the designated output point OUT, in this third embodiment, a=0 corresponds to a beam-blocking angular position. In other words, for a=0, the optical delay-line beam is not being routed to the output point OUT. This third embodiment enables twice as many delay-path scans per 360°-rotation of the rotatable mirror device M as the first and second embodiment: when rotating the rotatable mirror device in a clock-wise direction while the mirror pair P₁ is facing the fixed reflector device R₁, the optical delay-line beam first moves along the x-direction on the reflective surfaces 301,302 (see perspective view in Fig. 3c) of the third section 300 (Fig. 3a) towards the second section 200, thereby decreasing the rotation-dependent delay path length, and subsequently along the x-direction on the reflective surfaces 101,102 (see perspective view in Fig. 3c) of the first section 100, thereby increasing the rotation-dependent delay path length again (Fig. 3b). However, for identical dimensions of the rotatable mirror device, the maximum achievable rotation-dependent delay path length difference ΔL is shorter than in the first and the second embodiment of the optical delay line assembly. Hence, this third embodiment is suitable for applications that require a high acquisition rate, while the first and the second embodiments are more suitable when a high spectral resolution is the primary goal.

Fig. 3c shows a perspective view of the optical delay line assembly 1 according to the third embodiment shown in Figs. 3a and 3b. Since here, the second section 200 of the first fixed reflector devices R₁ is arranged radially opposite to the second section 200 of the second fixed reflector devices R₂, the optical delay-line beam can be reflected directly from the second section 200 of the first fixed reflector devices R₁ to the second section 200 of the second fixed reflector devices R₂ on a plane located above the rotatable mirror device M without any routing mirrors. Due to the lack of routing mirrors, this embodiment is particularly compact and potentially more stable against misalignments over time. However, the initial alignment of the two fixed reflector devices R₁,R₂ with respect to each other needs to be very precise.

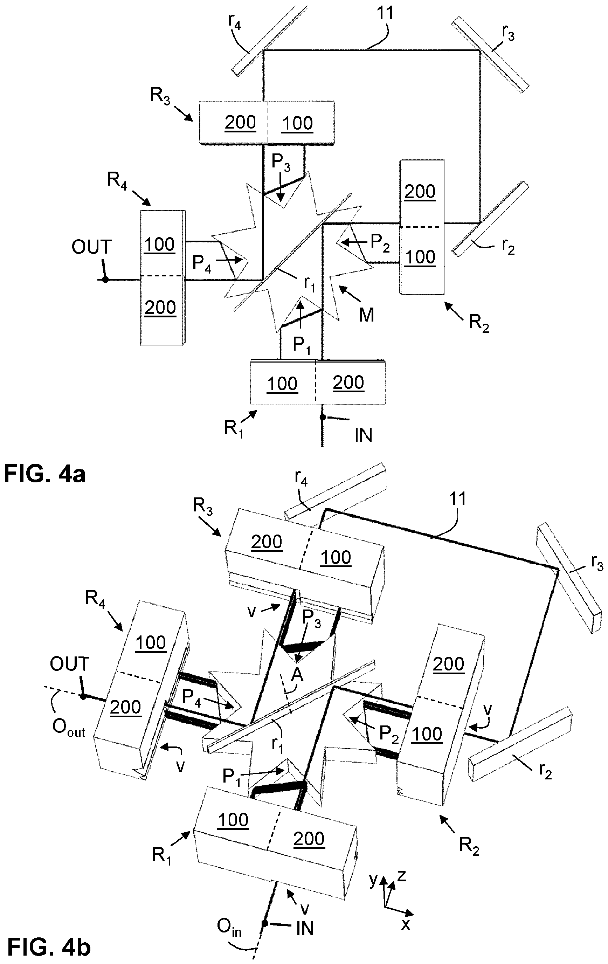

Fig. 4a and Fig. 4b show a top view and a perspective view, respectively, of the optical delay line assembly 1 according to a fourth embodiment. In this fourth embodiment, four fixed reflector devices R₁,R_{2,}R₃,R₄ are arranged tangentially to the rotation axis A, wherein each of the four fixed reflector devices R₁,R_{2,}R₃,R₄ faces one mirror pair of the rotatable mirror device M (which here also has the same star-shaped form as in the first embodiment shown in Fig. 1g), when the rotatable mirror device M is in a delay-scanning angular position. Each of the four fixed reflector devices R₁,R_{2,}R₃,R₄ is configured like the second embodiment of the fixed reflector R₁ shown in Figs. 2b and 2c, i.e. each of the four fixed reflector devices R₁,R_{2,}R₃,R₄ has a second section 200 with two pairs of reflective surfaces 201, 202. This fourth embodiment of the optical delay line assembly furthermore comprises four routing mirrors r₁,r₂,r₃,r₄, the first routing mirror r₁ has a reflective front surface and a reflective back surface and is arranged above the rotatable mirror device in a plane that comprises the rotation axis A. This first routing mirror r₁ is fixed in space, i.e. it does not rotate with the rotatable mirror device M. When the rotatable mirror device M is in a delay-scanning angular position, the optical delay-line beam 11 is reflected off the second pair of reflective surfaces of the second section 200 of the first fixed reflector device R₁ in a direction parallel to the input direction (here parallel to the z-axis) towards the reflective front surface of the first routing mirror r₁. The first routing mirror r₁ is arranged such that the optical delay-line beam is then reflected under a 90°-angle from the reflective front surface of the first routing mirror r₁ to the second pair of reflective surfaces of the second section 200 of the second fixed reflector device R₂. The optical delay-line beam 11 is then sent back and forth between the fixed second reflector device R₂ and the second mirror pair P₂ in the same manner as shown in the second embodiment in Figs. 2b and 2c. It then passes through the void space v underneath the second section 200 of the second fixed reflector device R₂ and hits the second routing mirror r₂, which is arranged further away from the rotation axis A than the second fixed reflector device R₂, and is then reflected from the second routing mirror r₂ to the third routing mirror r₃ (which is arranged further away from the rotation axis A than the second fixed reflector device R₃) and subsequently to the fourth routing mirror r₄ (which is arranged further away from the rotation axis A than the fourth fixed reflector device R₄). From the fourth routing mirror r₄, the optical delay-line beam 11 is then sent through the void space v underneath the second section 200 of the third fixed reflector device R₃ towards a third mirror pair P₃. The optical delay-line beam 11 is reflected back and forth between the third fixed reflector device R₃ and the third mirror pair P₃ in the same manner as shown in the second embodiment in Figs. 2b and 2c and is then reflected off the second pair of reflective surfaces of the second section 200 of the third fixed reflector device R₃ towards the reflective back surface of the first routing mirror r₁. Subsequently, the optical delay-line beam is reflected under a 90°-angle from the reflective back surface of the first routing mirror r₁ to the second pair of reflective surfaces of the second section 200 of the fourth fixed reflector device R₄. The optical delay-line beam 11 is then sent back and forth between the fourth fixed reflector device R₄ and a fourth mirror pair P₄ and finally passes through the void space v underneath the second section 200 of the fourth fixed reflector device R₄ along the outgoing optical axis Oₒᵤₜ.

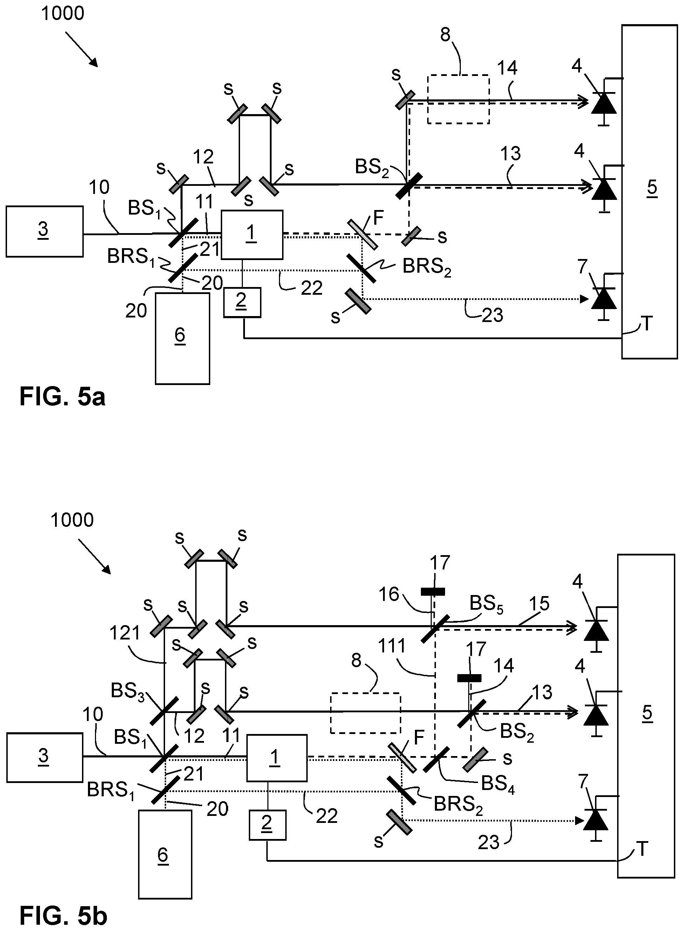

Fig. 5a shows a schematic overview of a first embodiment of an optical spectrometer 1000 comprising an optical delay line assembly 1 according to the present invention. The optical delay line assembly 1 may be one of the four embodiments described above or a modified version thereof within the scope of the present invention. The optical spectrometer 1000 shown in Fig. 5a further comprises a drive mechanism 2 for driving a rotation of the rotatable mirror device M of the optical delay line assembly 1, a main light source 3 generating an optical beam 10, a reference light source 6 generating a reference beam 20, wherein the reference light source 6 is a spectrally narrow-band laser, preferably a single-frequency laser, two main optical detectors 4 suitable to detect light from the main light source 3, a reference detector 7 suitable to detect light from the reference light source 6, and an acquisition system 5 configured to read out the two main optical detectors 4 and the reference detector 7. In this embodiment, the acquisition system 5 comprises a trigger input T that is connected to the drive mechanism 2. A first beam splitter BS₁ is configured split the optical beam 10 originating from the main light source 3 into a delay-line beam 11 propagating on a variable path comprising the rotation-dependent delay path within the optical delay line assembly 1, and into a static-line beam 12 propagating on a static path. A second beam splitter BS₂ is configured to superpose the delay-line beam 11 with the static-path 12 beam to yield a first recombined beam 13 and a second recombined beam 14 after the delay-line beam 11 has propagated through the optical delay line assembly 1. In this specific embodiment, a measurement sample 8 is placed inside the spectrometer such as to enable an interaction with the second recombined beam 14 before the second recombined beam 14 impinges on one of the two main optical detectors 4, while the first recombined beam 13 (not interacting with the measurement sample 8) impinges on the other one. In such a configuration, light that has propagated along the rotation-dependent delay-line path as well as light that has propagated along the static path both interact with the measurement sample. Without the measurement sample 8, both main optical detectors 4 are expected to yield the same signal, hence, a quantity to be determined about the measurement sample, such as e.g. its absorption profile, may be inferred by directly comparing the signals obtained from the two main optical detectors 4. A first reference-path beam splitter RBS₁ is configured to split the reference beam 20 originating from the reference light source 6 into a delay-line reference beam 21 co-propagating with the main optical delay-line beam 11 on the rotation-dependent delay path within the optical delay line assembly 1, and into a static-line reference beam 22 propagating on a static reference path. A second reference-path beam splitter RBS₂ is configured to superpose the delay-line reference beam 21 with the static-path reference beam 22 to yield a recombined reference beam 23 after the delay-line reference beam 21 has propagated through the optical delay line assembly 1. As shown here, the optical spectrometer 1000 may comprise a filter F to separate the delay-line 11 beam from the delay-line reference beam 21 after their co-propagation through the optical delay line assembly 1 and before the second reference-path beam splitter RBS₂. Said filter F may for instance be a dichroic filter in case the main light source and the reference light source operate at different wavelengths, or a polarization-based filter. The recombined reference beam 23 then impinges on the reference detector 7. As is shown in Fig. 5a, the optical spectrometer 1000 also comprises a plurality of steering mirrors s for general alignment.

Fig. 5b shows a schematic overview of a second embodiment of an optical spectrometer 1000 comprising an optical delay line assembly 1 according to the present invention. In addition to the features present in the first embodiment shown in Fig. 5a, this second embodiment further comprises a third beam splitter BS₃ configured to split off a portion 121 of the static-path beam, wherein said portion 121 of the static-path beam propagates on an additional static path, a fourth beam splitter BS₄ configured to split off a portion 111 of the delay-line beam after the delay-line beam has travelled through the optical delay line assembly 1 and a fifth beam splitter BS₅ configured to superpose said portion 121 of the static-path beam and said portion 111 of the delay-line beam to yield a third recombined beam 15 and a fourth recombined beam 16. Here, the second recombined beam 14 and fourth recombined beam 16 are blocked by beam blocks 17, while the second recombined beam 14 and the fourth recombined beam 16 each impinge on a main optical detector 4. In this specific example, the measurement sample 8 is placed such as to interact with the static beam 12 only, i.e. before the static beam 12 is superposed with the delay-line beam 11.

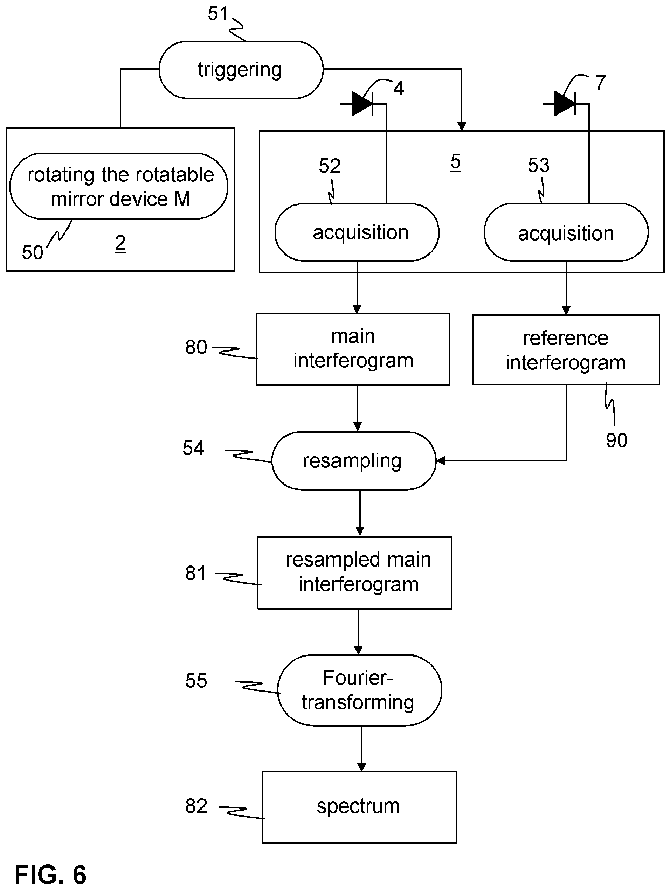

Fig. 6 illustrates a method for measuring optical spectra using an optical spectrometer 1000 comprising an optical delay line assembly according to the present invention. The method comprises rotating 50 the rotatable mirror device at an angular velocity ω = da/dt (where da/dt denotes the derivation of the rotation angle α with respect to time t), using the drive mechanism 2, triggering 51 an acquisition 52 of a main interferogram 80 from each main optical detector 4 and an acquisition 53 of a reference interferogram 90 from the reference detector 7 using the acquisition system 5 while the rotatable mirror device is rotating. The method further comprises resampling 54 the main interferogram 80 using the reference interferogram 90 to obtain a resampled main interferogram 81, and Fourier-transforming 55 the resampled main interferogram 81 to obtain a spectrum 82. In order to obtain an enhanced signal-to-noise ratio, the method may further the acquisition of a plurality of main interferograms and an averaging step, which may be performed either before or after Fourier-transforming 55 the resampled main interferograms 81.

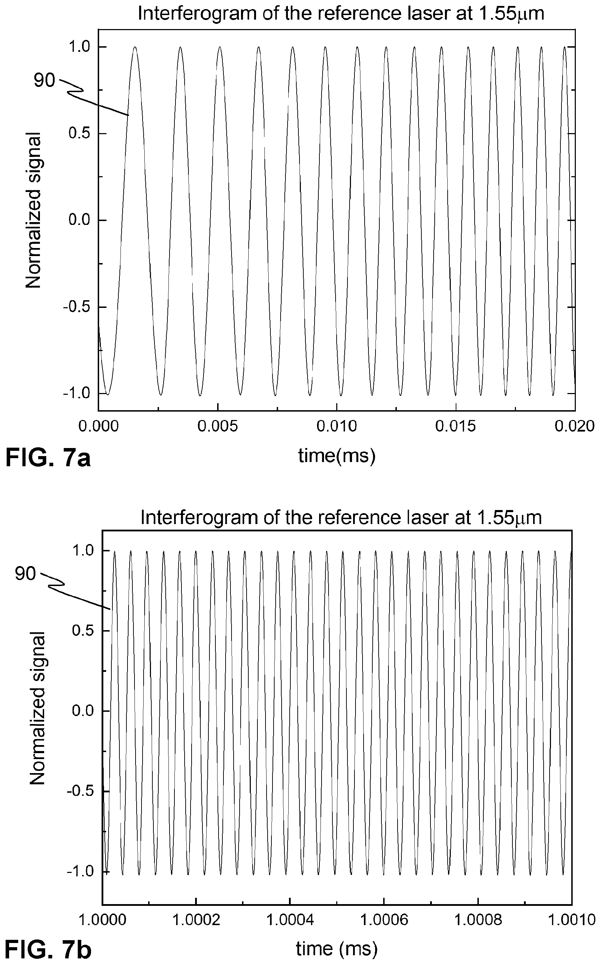

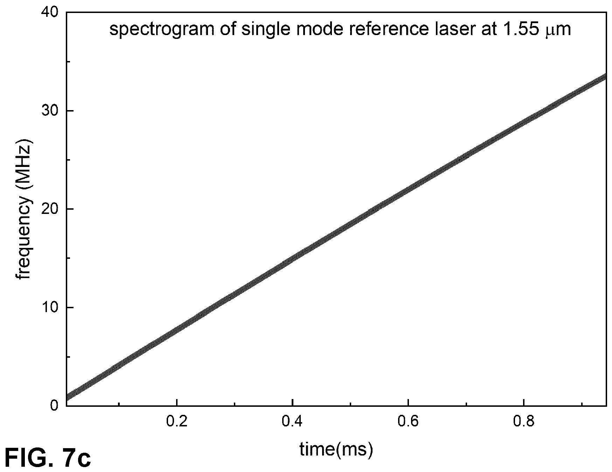

Figs. 7-9 show real data that has been acquired using the method described in Fig. 6 with an optical spectrometer 1000 which comprises an optical delay line assembly 1 according to the present invention.

Fig. 7a shows a first excerpt of a reference interferogram 90 versus a laboratory time axis measured with an optical spectrometer 1000 according to the present invention, wherein the rotatable mirror device was rotated 50 with a constant angular velocity ω = da/dt, and wherein the reference light source 6 is a laser operating at a wavelength of λ=1.55 µm.

Fig. 7b shows a second excerpt of the measured reference interferogram 90 at a later time on the laboratory time axis. As can be seen in Fig. 7a and 7b, the reference interferogram shows oscillations with an oscillation period that varies (in particular decreases in the excerpts shown here) along the laboratory time axis, which is a consequence of the nonlinear dependence of the rotation-dependent delay path length difference ΔL(α) on the rotation angle α (shown in Fig. 1c).

Fig. 7c shows a spectrogram 91 obtained by Fourier-transforming the reference interferogram 90 shown in Fig. 7a and Fig. 7b. The spectrogram 91 indicates the instantaneous frequency of the oscillations as a function of the laboratory time axis. As can be seen, the instantaneous frequency increases as a function of the laboratory time, which corresponds to the decrease of the oscillation period that can be observed in Figs. 7a and 7b.

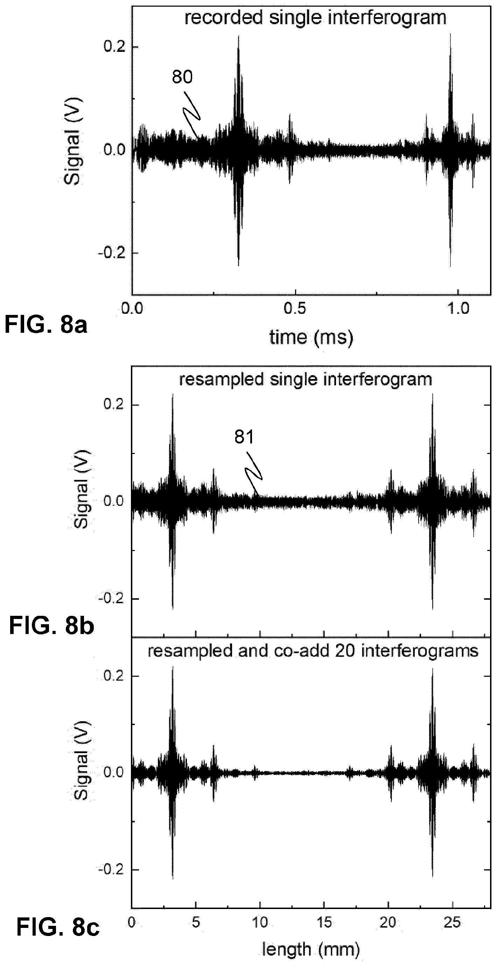

Fig. 8a shows a main interferogram 80 versus a laboratory time axis measured with an optical spectrometer 1000 according to the present invention, wherein the rotatable mirror device M was rotated 50 with a constant angular velocity ω = da/dt, and wherein main light source 3 is quantum cascade laser. The nonlinear dependence of the rotation-dependent delay path length difference ΔL(α) on the rotation angle α leads to a compression/stretching of the main interferogram with respect to the laboratory time axis.

Fig. 8b shows a resampled main interferogram 81 vs. the rotation-dependent delay path length difference ΔL(α), which was obtained by resampling 54 the main interferogram 80 shown in Fig. 7a using a reference interferogram as shown in Fig. 6a and 6b.

Fig. 8c shows an averaged interferogram obtained after co-adding 20 main resampled main interferograms 81 to illustrate how averaging interferograms can enhance the signal-to-noise ratio.

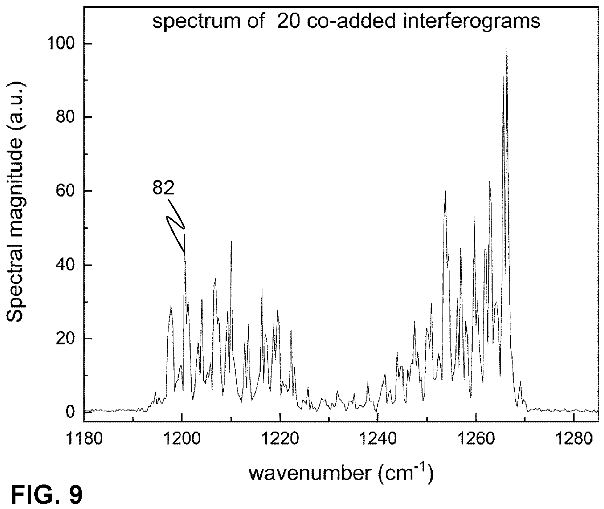

Fig. 9 shows a spectrum of the main light source 3, here a quantum cascade laser, obtained by Fourier-transforming 55 the averaged interferogram depicted in Fig. 8c.

**LIST OF REFERENCE SIGNS**

| | | | |
|---|---|---|---|
| 1 | optical delay line assembly | 201 | first reflective surface of the second section |
| 2 | drive mechanism | | |
| 3 | main light source | 202 | second reflective surface of the second section |
| 4 | main optical detector | | |
| 5 | acquisition system | 300 | third section |
| 6 | reference light source | 301 | first reflective surface of the third section |
| 7 | reference detector | | |
| 8 | measurement sample | 302 | second reflective surface of the third section |
| 10 | optical beam | | |
| 11 | delay-line beam | 1000 | optical spectrometer |
| 111 | portion of the delay-line beam | M | rotatable mirror device |
| 12 | static-path beam | A | rotation axis |
| 121 | portion of the static-path beam | IN OUT | input point output point |
| 13 | first recombined beam | Oᵢₙ | incoming optical axis |
| 14 | second recombined beam | Oₒᵤₜ | outgoing optical axis |
| 15 | third recombined beam | P₁,P₂ P₃,P₄ | mirror pair |
| 16 | fourth recombined beam | | |
| 17 | beam block | R₁,R₂ R₃,R₄ | fixed reflector device |
| 20 | reference beam | | |
| 21 | delay-line reference beam | S₁₁, S₂₁ | first plane mirror surface |
| 22 | static-path reference beam | S₁₂, S₂₂ | second plane mirror surface |
| 23 | recombined reference beam | r₁,r₂,r₃.r₄ | routing mirrorr |
| 80 | main interferogram | BS₁,BS₂, BS₃,BS₄, BS₅ | beam splitter |
| 81 | resampled main interferograms | | |
| 82 | spectrum | B₁ | bottom surface of the first section of the fixed reflector device |
| 90 | reference interferogram | | |
| 100 | first section | | |
| 101 | first reflective surface of the first section | B₂ | bottom surface of the second section of the fixed reflector |
| 102 | second reflective surface of the first section | v | device void space |
| 200 | second section | s | steering mirror |
| α | rotation angle | | |
| θ₁₀₁, θ₁₀₂, θ₂₀₁, θ₂₀₂ | inclination angle | | |

## Claims

1. An optical delay line assembly, comprising:
a rotatable mirror device (M) defining a rotation axis (A), wherein the rotatable mirror device (M) comprises at least one mirror pair (Pi), each mirror pair (Pi) comprising a first plane mirror surface (S₁₁) with a first surface normal (n₁₁) and a second plane mirror surface (S₁₂) with a second surface normal (n₁₂), wherein the surface normal (n₁₁) of the first plane mirror surface (S₁₁) is perpendicular to the surface normal (n₁₂) of the second plane mirror surface (S₁₂);
a reflector arrangement comprising at least one fixed reflector device (R₁);
wherein the reflector arrangement and the rotatable mirror device (M) are arranged such that the rotatable mirror device (M) is able to assume at least one range of delay-scanning angular positions for which an optical delay-line beam (11) coupled into the delay line assembly (1) along an incoming optical axis (Oᵢₙ) is able to propagate in at least a single pass along a rotation-dependent delay path between a spatially fixed input point (IN) located on the incoming optical axis (Oᵢₙ) and a spatially fixed output point (OUT) located on an outgoing optical axis (Oₒᵤₜ);
**characterized in that** the reflector arrangement is configured and arranged such that the single pass along the rotation-dependent delay path comprises:
at least two reflections off the first plane mirror surface (S₁₁) of each mirror pair (Pi), wherein the at least two reflections off the first plane mirror surface (S₁₁) are offset from each other in a direction parallel to the rotation axis (A),
at least two reflections off the second plane mirror surface (S₁₂) of each mirror pair (Pi), wherein the at least two reflections off the second plane mirror surface (S₁₂) are offset from each other in a direction parallel to the rotation axis (A), and
at least two reflections off each fixed reflector device (R₁) of the reflector arrangement, wherein the at least two reflections off each reflector device (R₁) are offset from each other in a direction parallel to the rotation axis (A).

2. The optical delay line assembly of claim 1, wherein each fixed reflector device (R₁) comprises a first section (100), the first section (100) comprising at least one pair of reflective surfaces, each pair comprising a first reflective surface (101) and a second reflective surface (102), wherein each of the first reflective surface (101) and the second reflective surface (102) has a surface normal (n₁₀₁, n₁₀₂) that is inclined by an inclination angle (θ₁₀₁, θ₁₀₂) with respect to the rotation axis (A),
wherein the surface normal (n₁₀₁) of the first reflective surface (101) is perpendicular to the surface normal (n₁₀₂) of the second reflective surface (102), and
wherein the surface normal of the first plane mirror surface (S₁₁) and the surface normal of the second plane mirror surface (S₁₂) of each mirror pair (Pi) of the rotatable mirror device (M) are each perpendicular to the rotation axis (A).

3. The optical delay line assembly of claim 2, wherein each fixed reflector device (R₁) comprises a second section (200), the second section (200) being arranged adjacent to the first section (100) in a direction tangential to the rotation axis (A),
wherein the second section (200) comprises at least one pair of reflective surfaces, each pair comprising a first reflective surface (201) and a second reflective surface (202), wherein each of the first reflective surface (201) and the second reflective surface (202) has a surface normal (n₂₀₁, n₂₀₂) that is inclined by an inclination angle (θ₂₀₁, θ₂₀₂) with respect to the rotation axis (A) and wherein the surface normal (n₂₀₁) of the first reflective surface (201) is perpendicular to the surface normal (n₂₀₂) of the second reflective surface (202), and
wherein the at least one pair of reflective surfaces of the second section (200) is offset in a direction parallel to the rotation axis (A) with respect to the at least one pair of reflective surfaces of the first section (100), and
wherein a bottom surface (B₂) of the second section (200) is preferably offset with respect to a bottom surface (B₁) of the first section (100) in a direction parallel to the rotation axis (A), such that a void space (v) occurs underneath the bottom surface (B₂) of the second section (200), through which void space (v) the optical delay-line beam (11) is able to pass.

4. The optical delay line assembly of claim 3, wherein each fixed reflector device (R₁) comprises a third section (300), the third section (300) being arranged adjacent to the second section (200) in a direction tangential to the rotation axis (A),
wherein the third section (300) comprises at least one pair of reflective surfaces, each pair comprising a first reflective surface (301) and a second reflective surface (302), wherein each of the first reflective surface (301) and the second reflective surface (302) has a surface normal (n₃₀₁, n₃₀₂) that is inclined by an inclination angle (θ₃₀₁, θ₃₀₂) with respect to the rotation axis (A) and wherein the surface normal (n₃₀₁) of the first reflective surface (301) is perpendicular to the surface normal (n₃₀₂) of the second reflective surface (302), and
wherein the at least one pair of reflective surfaces of the third section (300) is aligned in a direction parallel to the rotation axis (A) with the at least one pair of reflective surfaces of the first section (100).

5. The optical delay line assembly of claim any one of the preceding claims,
wherein the reflector arrangement comprises a first fixed reflector device (R₁) and a second fixed reflector device (R₂), wherein the first fixed reflector device (R₁) and the second fixed reflector device (R₂) are each arranged in a direction tangential to the rotation axis (A), and
wherein the rotatable mirror device (M) comprises a first mirror pair (Pi) facing the first fixed reflector device (R₁) and a second mirror pair (P₂) facing the second fixed reflector device (R₂) when the rotatable mirror device (M) is in the at least one range of delay-scanning angular positions.

6. The optical delay line assembly of claim 5, wherein the first fixed reflector device (R₁) and the second fixed reflector device (R₂) are arranged radially opposite to each other with respect to the rotation axis (A).

7. The optical delay line assembly of claim 5 or 6, wherein the optical delay line assembly (1) comprises a first routing mirror (r₁) arranged to pick up the optical delay-line beam (11) after the optical delay-line beam (11) has experienced the at least two reflections off the first fixed reflector device (R₁), the at least two reflections off the first plane mirror surface (S₁₁) and the at least two reflections off the second plane mirror surface (S₁₂) of the first mirror pair (Pi), and
wherein the optical delay line assembly (1) further comprises at least one additional routing mirror (r₂) for routing the optical delay-line beam (11) towards the second mirror pair (P₂) of the rotatable mirror device (M) to enable the optical delay-line beam (11) to experience the at least two reflections off the first plane mirror surface (S₂₁) of the second mirror pair (P₂), the at least two reflections off the second plane mirror surface (S₂₂) of the second mirror pair (P₂) and the least two reflections off the second fixed reflector device (R₂).

8. The optical delay line assembly of claim 7, wherein the first routing mirror (r₁) and/or the at least one additional routing mirror (r₂) are arranged radially further away from the rotation axis (A) than the first fixed reflector device (R₁) and the second fixed reflector device (R₂).

9. The optical delay line assembly of claim 7, wherein the first routing mirror (r₁) and/or the at least one additional routing mirror (r₂) are arranged radially closer to the rotation axis (A) than the first fixed reflector device (R₁) and the second fixed reflector device (R₂).

10. The optical delay line assembly of claim 5 or 6 in combination with claim 3 or 4, wherein the first fixed reflector device (R₁) and the second fixed reflector device (R₂) are configured to enable the optical delay-line beam (11) to be reflected from the second section (200) of the first fixed reflector device (R₁) towards the second section (200) of the second fixed reflector device (R₂) when the rotatable mirror device (M) is in the at least one range of delay-scanning angular positions.

11. The optical delay line assembly of claim 10, further comprising at least one routing mirror (r₁) for routing the optical delay-line beam from the second section (200) of the first fixed reflector device (R₁) to the second section (200) of the second fixed reflector device (R₂), the at least one routing mirror (r₁) being preferably arranged radially closer to the rotation axis (A) than the first fixed reflector device (R₁) and the second fixed reflector device (R₂).

12. The optical delay line assembly of any one of the preceding claims, wherein the rotatable mirror device (M) and/or each fixed reflector device (R₁, R₂) each consist of milled metal pieces, and
wherein preferably the plane mirror surfaces of the rotatable mirror device (M) and/or the reflective surfaces of the fixed reflector device (R₁, R₂) are polished surfaces of the respective milled metal piece.

13. An optical spectrometer comprising:
the optical delay line assembly (1) of any one of the preceding claims;
a drive mechanism (2) for driving a rotation of the rotatable mirror device (M) of the optical delay line assembly (1);
a main light source (3) generating an optical beam (10);
a main optical detector (4) suitable to detect light from the main light source (3);
an acquisition system (5) configured to read out the main optical detector (4) and,
optionally, a measurement sample (8), placed such as to enable the optical beam (10) to interact with the measurement sample (8).

14. The optical spectrometer of claim 13, further comprising
a reference light source (6) generating a reference beam (20), wherein the reference light source (6) is a spectrally narrow-band laser, preferably a single-frequency laser;
a reference detector (7) suitable to detect light from the reference light source (6), and
wherein the acquisition system (5) is further configured to read out the reference detector (7).

15. A measurement method using the optical spectrometer (1000) of any one of claims 13 or 14, the measurement method comprising:
rotating (50) the rotatable mirror device (M) using the drive mechanism (2), and
acquiring (52) a signal from each main optical detector (4) using the acquisition system (5) while the rotatable mirror device (M) is rotating.
